(19) Europäisches Patentamt
European Patent Office
Office européen des brevets

(11) **EP 4 775 305 A1**

(12) **EUROPEAN PATENT APPLICATION**

(43) Date of publication:
**15.07.2026 Bulletin 2026/29**

(21) Application number: **26150602.6**

(22) Date of filing: **07.01.2026**

(51) International Patent Classification (IPC):
***B01J 23/58*** *(2006.01)* ***B01J 35/30*** *(2024.01)*
***B01J 37/02*** *(2006.01)* ***B01J 23/46*** *(2006.01)*
***B01J 35/57*** *(2024.01)* ***B01D 53/94*** *(2006.01)*

(52) Cooperative Patent Classification (CPC):
**B01J 35/393; B01D 53/945; B01J 21/08; B01J 23/002; B01J 23/464; B01J 23/58; B01J 35/19; B01J 35/394; B01J 35/57; B01J 37/0203; B01J 37/0219; B01J 37/0244;**
B01D 2255/1021; B01D 2255/1023;
B01D 2255/1025; (Cont.)

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **09.01.2025 US 202563743244 P**

(71) Applicant: **Johnson Matthey Public Limited Company**
**London EC2V 7AD (GB)**

(72) Inventors:
- **ZHENG, Qinghe**
  **Wayne, 19087 (US)**
- **LU, Jing**
  **Wayne, 19087 (US)**
- **HOWARD, Michael**
  **Wayne, 19087 (US)**

(74) Representative: **Johnson Matthey Public Limited Company**
**Blounts Court Road, Sonning Common**
**Intellectual Property Department**
**Reading RG4 9NH (GB)**

(54) **CATALYST ARTICLE HAVING IMPROVED BARIUM DISTRIBUTION**

(57) The present invention provides a method of manufacturing a catalyst article, the method comprising:
providing a substrate;
providing a washcoat slurry, the washcoat slurry comprising a solvent, a support material, platinum group metal (PGM) ions, e.g. palladium, barium ions and a chelating agent of formula (1);
coating the substrate with the washcoat slurry to provide a coated substrate; and
heating the coated substrate to calcine the washcoat slurry;
wherein formula (1) is defined by:

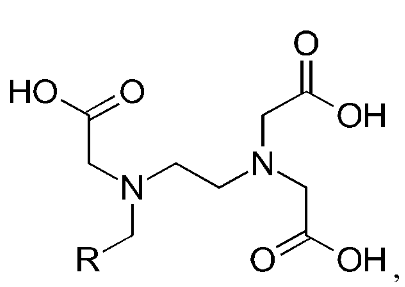

,

wherein R is $CH_2OH$, COOH or

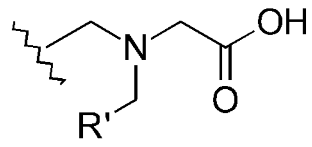

,

wherein R' is $CH_2OH$ or COOH.

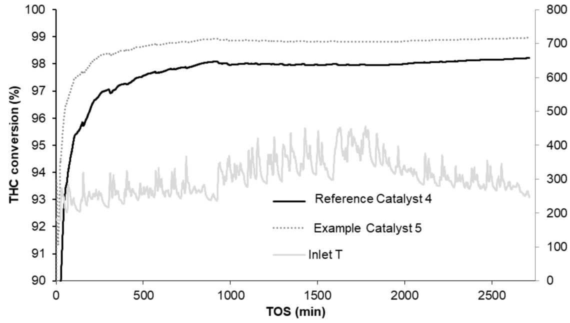


FIG. 3

EP 4 775 305 A1

(52) Cooperative Patent Classification (CPC): (Cont.)
B01D 2255/2042; B01D 2255/2063;
B01D 2255/2092; B01D 2255/407;
B01D 2255/908; B01D 2255/9202; B01D 2258/014

## Description

FIELD OF THE INVENTION

The invention relates to a method of manufacturing a catalyst article, a washcoat slurry, catalyst articles, an emission treatment system and a method of treating an exhaust gas. In particular, the catalyst articles provided herein may have improved barium distribution within the catalytic regions (washcoats).

BACKGROUND OF THE INVENTION

A three-way catalyst (TWC) allows simultaneous conversions (~98%) of CO, hydrocarbon (HCs) and $NO_x$ from gasoline engine exhaust to innocuous compounds at stoichiometric air-to-fuel ratio. Specifically, the oxidation of CO and HCs to $CO_2$ and steam ($H_2O$) is mainly catalyzed by Pd, while the reduction of $NO_x$ to $N_2$ is mainly catalyzed by Rh. Modern TWCs use supported platinum group metal (hereinafter "PGM") catalysts (Pd, Rh, Pt, *etc.*) deposited on a single, double or multilayer support, with the support material consisting of metal oxides with high specific surface area, primarily stabilized gamma alumina and ceria-containing oxygen storage materials. The supported catalyst is washcoated on a ceramic monolithic substrate.

Conventional preparation of a TWC washcoat slurry generally involves the use of a solution of an inorganic PGM precursor, *e.g.* nitrate, acetate, hydroxide or chloride salt, to allow the PGM element to be deposited onto the oxide support via incipient wetness or wet impregnation. Promoter salts are also often added to the washcoat formulations for enhanced TWC performance. Once the monolithic substrate is washcoated with the as-prepared slurry, drying and calcination steps are followed to decompose the inorganic salts and to allow PGM and promoter elements to be fixed onto the support materials. Conventional TWCs prepared using the above method often provide only limited control over the properties of the catalytically active and promoter species (*i.e.* average particle size of PGM and promoters, affiliation of these active components, and metal-support interactions). This is mainly due to the migration and grain growth during drying and high-temperature calcination processes.

Typically, Pd is inferior to Rh for the $NO_x$ reduction reaction under rich TWC conditions. Alkaline earth metals, such as barium, are well known to be excellent promoters for Pd's catalytic functions. Ba can donate electrons to Pd, making the electron configuration of Pd more like Rh, and thus can improve the rich $NO_x$ reduction activity of a Pd TWC. Both $NO_x$ and CO adsorption intensity on Pd is reduced on Ba-promoted Pd catalysts, resulting in enhanced $NO_x$ and CO conversion. Ba also helps to stabilize PdO and suppress the sintering due to the high-temperature exposure in the lifetime usage of a three-way catalytic converter. Last but not least, Ba is a good stabilizer for the alumina support material, which helps to maintain the high dispersion of Pd species.

When using a Ba component as an additive, it is important to control the locations and size of both palladium and barium for optimizing the synergistic interactions with the active Pd, the Ba species, and support components. However, in catalysts obtained from known methods, due to the generally larger particle sizes of the alkaline-earth-metal-containing species compared to the Pd nanoparticles, the interaction may not be optimized. Moreover, this interaction may deteriorate on ageing in the catalysts obtained from known methods. Accordingly, there is a need to provide a method of manufacturing a catalyst article that enables a more optimized interaction between the palladium nanoparticles and the alkaline-earth-metal-containing species in the obtained catalyst article, ideally with equivalent particle size and intimate proximity, which enables such an improved performance and also less susceptible to ageing. In order to achieve this, it may be particularly important to improve the distribution of the barium within the washcoat layer.

Moreover, typical methods may result in an uneven distribution of the Ba in the washcoat layers, such as being localized at the surface of the washcoat layer. There is also therefore a need to increase the homogeneity of the washcoat layers.

There is therefore a desire to improve catalyst article manufacturing methods in order to improve the distribution of barium within the washcoat layers and, further, improve the interaction of the barium promoter with the PGM, such as palladium.

SUMMARY OF THE INVENTION

One aspect of the present disclosure is directed to a method of manufacturing a catalyst article, the method comprising:

providing a substrate;
providing a washcoat slurry, the washcoat slurry comprising a solvent, a support material, platinum group metal (PGM) ions, barium ions and a chelating agent of formula (1);
coating the substrate with the washcoat slurry to provide a coated substrate; and

heating the coated substrate to calcine the washcoat slurry;
wherein formula (1) is defined by:

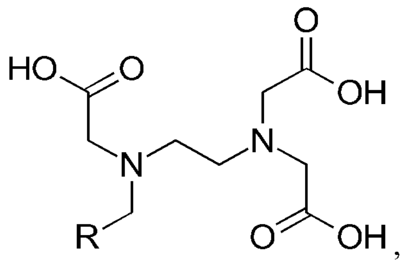

wherein R is $CH_2OH$, COOH or

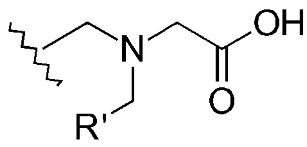

,

wherein R' is $CH_2OH$ or COOH.

Another aspect of the present invention is directed to a washcoat slurry comprising a solvent, a support material, platinum group metal (PGM) ions, barium ions and a chelating agent of formula (1):

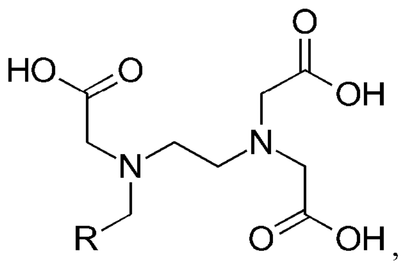

wherein R is $CH_2OH$, COOH or

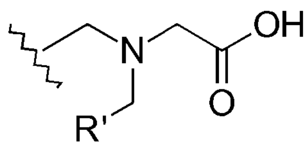

,

wherein R' is $CH_2OH$ or COOH.

Another aspect of the present disclosure is directed to a catalyst article obtained or obtainable by the method of the above aspect, the catalyst article for use in an emission treatment system.

Another aspect of the present disclosure is directed to a catalyst article for use in an emissions treatment system, the catalyst article comprising:

a substrate; and
a first catalytic region on the substrate;
wherein the first catalytic region comprises a support material, palladium nanoparticles and barium carbonate nanoparticles; and
wherein the palladium nanoparticles have a mean crystallite size of from 5 to 25 nm and the barium carbonate nanoparticles have a mean crystallite size of from 25 to 36 nm.

Another aspect of the present disclosure is directed to an emission treatment system comprising the catalyst

article of the above aspects.

Another aspect of the present disclosure is directed to a method of treating an exhaust gas, the method comprising: providing the catalyst article of the above aspects; and contacting the catalyst article with an exhaust gas.

BRIEF DESCRIPTION OF THE DRAWINGS

**FIG. 1** shows Pearson correlation coefficients of Pd-Ba correlation of fresh Reference Catalyst 1 vs. Example Catalyst 1, as calculated based on FE-EPMA elemental area analysis.

**FIG. 2** shows Pearson correlation coefficients of Pd-Ba correlation of fresh Reference Catalyst 2 vs. Comparative Catalyst 1 and Example Catalysts 2 and 3, as calculated based on FE-EPMA elemental area analysis.

**FIG. 3** shows engine performance in terms of THC conversion of engine aged Reference Catalyst 4 vs. Example Catalyst 5 of the Examples.

DETAILED DESCRIPTION OF THE INVENTION

The present invention seeks to tackle at least some of the problems associated with the prior art or at least to provide a commercially acceptable alternative solution thereto.

In a first aspect, the present invention provides a method of manufacturing a catalyst article, the method comprising:

providing a substrate;
providing a washcoat slurry, the washcoat slurry comprising a solvent, a support material, platinum group metal (PGM) ions, barium ions and a chelating agent of formula (1);
coating the substrate with the washcoat slurry to provide a coated substrate; and
heating the coated substrate to calcine the washcoat slurry;
wherein formula (1) is defined by:

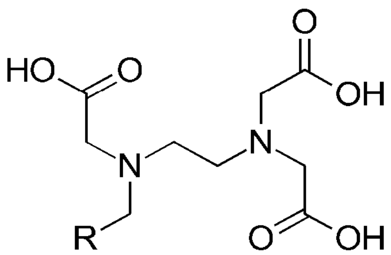

,

wherein R is $CH_2OH$, COOH or

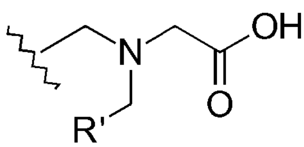

,

wherein R' is $CH_2OH$ or COOH.

Each aspect or embodiment as defined herein may be combined with any other aspect(s) or embodiment(s) unless clearly indicated to the contrary. In particular, any features indicated as being preferred or advantageous may be combined with any other feature indicated as being preferred or advantageous.

Surprisingly, it has been found that a catalyst article manufactured by such a method may improve the distribution of the barium within the calcined washcoat, i.e. improve the homogeneity of the barium within the calcined washcoat. Without wishing to be bound by theory, it is thought that this may be due to the presence of the chelating agent of formula (1) present in the washcoat slurry. In particular, the chelating agent of formula (1) may form a complex with the barium in the

washcoat slurry, and such a complex may assist in "fixing" the barium to the support material. In the absence of the chelating agent of formula (1), it is thought that during evaporation of the solvent during drying and calcination steps, the "free" barium ions in the slurry may migrate to the surface of the washcoat slurry as the washcoat slurry dries, concentrating the barium near the surface of the calcined washcoat. However, this phenomenon may occur less when the barium ions are in complex form with the chelating agent of formula (1). This may be because the interaction between the support material and such a complex may be stronger.

Advantageously, when used in an emission treatment system, a catalyst article manufactured by the method may have improved TWC light-off performance, such as lower $NO_x$, CO and total hydrocarbon (THC) light-off temperatures. The term "light-off temperature" as used herein may encompass the $T_{50}$, i.e. the temperature at which a catalyst reaches 50% conversion of a particular pollutant species, as is known to the skilled person. Surprisingly, the chelating agents of formula (1) may also be more effective at providing these benefits than other known chelating agents, such as citric acid (citrate), which is also a polycarboxylate multidentate chelating agent.

In addition, it has also been found that the correlation/colocation between the PGM species and the barium promoter may be improved, and the mean crystallite sizes of the resulting barium carbonate (Witherite) nanoparticles may also be reduced. In other words, without wishing to be bound by theory, there may be more intimate interactions between the PGM species and the barium promoter, as well as between the barium promoter and the support material(s), thanks to a more universal distribution of the Ba species within the washcoat at smaller particle sizes, for example. Without wishing to be bound by theory, it is thought that these properties may also assist in improving the catalytic performance of the catalyst article, as well as increasing the catalyst article's resistance to deactivation on ageing.

The term "catalyst article" used herein may encompass an article in which a catalyst is supported thereon or therein. The article may take the form of, for example, a honeycomb monolith or a filter, e.g. a wall flow substrate or a flow-through filter. The catalyst article may be for use in an emission treatment system, in particular an emission treatment system for a gasoline engine, preferably a stoichiometric gasoline engine. The catalyst article may be for use in three-way catalysis, i.e. for use as a three-way catalyst (TWC). The catalyst article may be for use as a gasoline particulate filter (GPF), i.e. the catalyst article may be a GPF. Alternatively, the catalyst article may be for use in an emission treatment system for a diesel engine. The catalyst article may be for use in diesel oxidation catalysis, i.e. for use as a diesel oxidation catalyst (DOC). The catalyst article may also be for use in $NO_x$ trap catalysis, i.e. for use as a $NO_x$ trap catalyst.

The term "PGM" as used herein means "platinum group metal" and may comprise one or more of platinum, palladium, rhodium, ruthenium, osmium and iridium, for example. Preferably, the PGM comprises one or more of platinum, palladium and rhodium, depending on the intended application, such as for use as a TWC, GPF, DOC or $NO_x$ trap catalyst. The anionic complex may comprise one or more PGM metal centres. For example, the anionic complex may comprise two or more metal centres, such as two or three metal centres.

The term "solvent" as used herein may encompass any solvent typically used in a washcoat slurry in the field of the invention. Water and organic solvents (methanol, ethanol, propanol, and the like) or their mixtures can be used. The solvent typically comprises, preferably consists of, water. In other words, the washcoat slurry is preferably an aqueous slurry. While the term "solvent" is used herein, it will be appreciated that many components of the washcoat slurry may be present in suspension, such as the support materials. The term "washcoat slurry" as used herein is a term of art and may typically refer to a suspension, preferably an aqueous suspension, of the components of the washcoat slurry. The term "washcoat" is well known in the art and refers to an adherent coating that is applied to a substrate usually during production of a catalyst.

While the chelating agent of formula (1) may be included for the purpose of forming a complex with the barium ions, for example, it may be that at least some of the chelating agent of formula (1) may also form a complex with the PGM ions in the washcoat slurry.

Of course, while formula (1) depicts carboxylic acid groups as free acids, it will be appreciated that the chelating agent of formula (1) may be present in the washcoat slurry in ionic form, such as wherein one or more of the carboxyl groups are in carboxylate ($COO^-$) or salt form and/or the hydroxyl group may also be deprotonated ($O^-$) or in salt form. In other words, formula (1) may encompass deprotonated or salt forms of the compound. However, the neutral formula is indicated for simplicity.

It will also be appreciated that other compounds that may act as a chelating agent may also be present in the washcoat slurry. In one embodiment, any chelating agent present in the washcoat slurry consists essentially of, preferably consists of the chelating agent of formula (1).

Preferably, the chelating agent of formula (1) comprises ethylenediaminetetraacetic acid (EDTA), hydroxyethylethylenediaminetriacetic acid (HEDTA) and/or diethylenetriamine pentaacetic acid (DTPA), more preferably wherein the chelating agent of formula (1) comprises DTPA. In other words, preferably, R is $CH_2OH$, COOH or

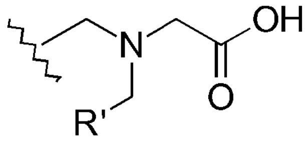

,

wherein R’ is $CH_2OH$, more preferably R is

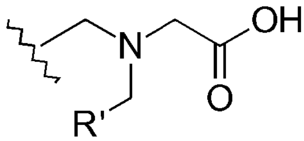

,

wherein R’ is $CH_2OH$. These chelating agents have been found to be particularly effective at providing the advantages described herein.

Preferably, the PGM comprises one or more of Rh, Pt and Pd, preferably Pd. In other words, the washcoat slurry preferably comprises Pd ions. In one embodiment, the PGM ions consist of Pd ions.

Preferably, providing a washcoat slurry comprises combining, in order, a solvent, barium ions and a chelating agent of formula (1). Combining the solvent and the barium ions (i.e. addition of the barium ions) preferably comprises contacting the solvent (which may already be present as a slurry, such as a slurry comprising the solvent and support material) with a barium salt. The barium salt preferably comprises barium acetate, barium hydroxide and/or barium chloride, for example. Optionally, an acid or a base may be added after barium addition, which may improve the solubility of the barium salt. Without wishing to be bound by theory, it is thought that the barium ions may form a complex with the chelating agent of formula (1) once the chelating agent of formula (1) is introduced. The solvent may already be present as a slurry. For example, preferably, providing a washcoat slurry comprises:

providing a PGM-containing slurry comprising a solvent, a support material and PGM ions;
introducing barium ions into the PGM-containing slurry to provide a PGM-and-Ba-containing slurry;
introducing a chelating agent of formula (1) to the PGM-and-Ba-containing slurry

Of course, the solvent, support material and PGM ions referred to here may typically correspond to the total solvent, support material and PGM ions, respectively, of the washcoat slurry described herein. However, as will be appreciated, it is contemplated that further solvent, support material and PGM ions may be introduced into the washcoat slurry after these steps.

Introducing barium ions into the PGM-containing slurry preferably comprises contacting the PGM-containing slurry with a barium salt. In some alternative embodiments, the barium salt comprises a salt of the barium ions and the chelating agent of formula (1), i.e. wherein introducing barium ions into the washcoat slurry and introducing the chelating agent of formula (1) into the washcoat slurry occur in the same step. For example, the barium ions and the chelating agent of formula (1) may be introduced into the washcoat slurry as a preformed complex in solution.

Preferably, providing a PGM-containing slurry comprises:

providing a solution comprising PGM ions, preferably an aqueous solution; and
contacting the solution with the support material.

Providing a solution comprising PGM ions preferably comprises contacting a PGM salt, such as a PGM nitrate, acetate and/or chloride, with a solvent.

Preferably, the washcoat slurry further comprises a PGM-fixing agent, preferably wherein the PGM-fixing agent comprises one or more of a polyphenol comprising an ester functional group and gallic acid. In other words, the washcoat slurry preferably further comprises one or more of a polyphenol comprising an ester functional group and gallic acid.

Suitable (other) PGM-fixing agents may be known to the skilled person and the invention may not be limited to the specific PGM-fixing agents described herein. The term "PGM-fixing agent" as described herein may encompass a compound that improves the strength of the interaction between the PGM species and the support material, such as to improve the distribution of the PGM species within the resulting calcined washcoat. In other words, the PGM-fixing agent may improve the "fixing" of the PGM to the support material. The use of polyphenols, such as tannic acid and gallic acid as PGM-fixing agents are described in, for example, WO2022258961, WO2022258962 and WO2024175877, which are each incorporated herein by reference.

The term "polyphenol" as used herein encompasses polymers containing several hydroxyl groups on aromatic rings. Polyphenols are generally moderately water-soluble compounds. Polyphenols may be natural or synthetic, but in the present invention are preferably naturally occurring so as to render the method more environmentally friendly. The term "polyphenol" as used herein may encompass a polymer with a weight average molecular weight of 500 to 4,000 g/mol, greater than 12 phenolic hydroxyl groups and with 5 to 7 aromatic rings per 1,000 g/mol. The polyphenol may be, for example, a phenolic acid (e.g. tannic acid, caffeic acid), a flavonoid (e.g. flavone, flavonol, flavanol, flavanone, isoflavone), a stilbene, or a lignin (polyphenols derived from phenylalanine found in flax seed and other cereals).

The polyphenol comprises an ester functional group, typically a carboxylate ester functional group. The polyphenol preferably comprises two or more ester functional groups and/or carboxylate ester functional groups. The terms "ester functional group" and "carboxylate ester functional group" may encompass a functional group comprising a carboxyl group bonded to an OR group, i.e.

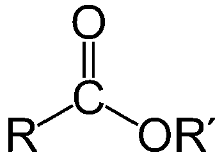

The polyphenol preferably comprises tannic acid. The term "tannic acid" as used herein may encompass a mixture of polygalloyl glucoses or polygalloyl quinic acid esters with the number of galloyl moieties per molecule ranging from 2 up to 12 depending on the plant source used to extract the tannic acid. Tannic acid may be a natural phenolic compound and may be extracted from, *inter alia,* bark of oak, hemlock, chestnut and mangrove; the leaves of certain sumacs; and fruits of many plants. The term "tannic acid" as used herein may encompass a compound consisting of a central glucose ring and 10 galloyl groups, i.e. decagalloyl glucose, as shown by the following structural formula:

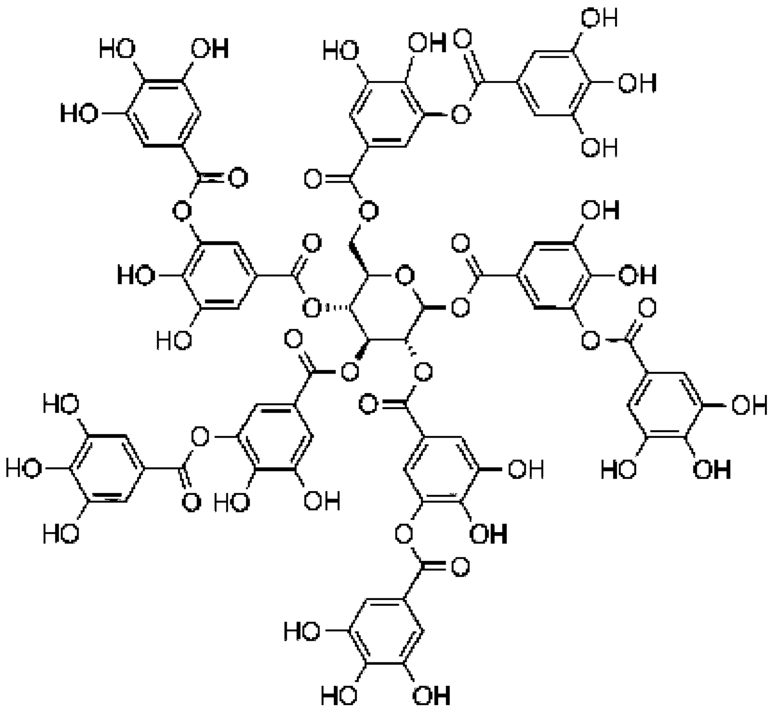

Such a compound has the IUPAC name 1,2,3,4,6-penta-*O*-{3,4-dihydroxy-5-[(3,4,5-trihydroxybenzoyl)oxy]benzoyl}-D-glucopyranose or 2,3-dihydroxy-5-({[(2R,3R,4S,5R,6R)-3,4,5,6-tetrakis({3,4-dihydroxy-5-[(3,4,5-trihydroxyphenyl)carbonyloxy]phenyl}carbonyloxy)oxan-2-yl]methoxy}carbonyl)phenyl 3,4,5-trihydroxybenzoate. Each of the five hydroxyl groups of the glucose molecule is esterified with a molecule of digallic acid.

Tannic acid may coordinate with metal ions through hydrogen bonds or covalent bonds. The PGM-tannic acid complex may be fixed onto supports, e.g. metal oxide supports, in a washcoat, where the carboxylate ester functional groups in the tannic acid ligands and surface hydroxyl groups on the support may interact through electrostatic forces or hydrogen-bond formation.

Since tannic acid is naturally occurring, the use of tannic acid to form the PGM complex may be more

environmentally friendly in comparison to the use of other, non-naturally occurring ligands. Tannic acid favourably has a decomposition point in the range 210 to 215 °C. It is also soluble in water (1 g of tannic acid dissolves in 0.35 ml of water at standard temperature and pressure). The use of tannic acid may result in particularly favourable perturbated light-off performance.

The polyphenol preferably has a weight average molecular weight $M_w$ of from 500 to 4,000, more preferably from 1,000 to 2,000 g/mol, even more preferably from 1,600 to 1,800 g/mol measured by light scattering. The weight average molecular weight *M*w is determined by the formula:

$$\bar{M}_w = \frac{\sum_i N_i M_i^2}{\sum_i N_i M_i}$$

where $N_i$ is the number of molecules of molecular mass $M_i$. The use of such weight average molecular weights may result in particularly favourable perturbated light-off performance.

The polyphenol preferably has a number average molecular weight $M_n$ of from 500 to 4,000 g/mol measured by gel permeation chromatography (GPC). The number average molecular weight $M_w$ is determined by the formula:

$$\bar{M}_n = \frac{\sum_i N_i M_i}{\sum_i N_i}$$

where again $N_i$ is the number of molecules of molecular mass $M_i$. The use of such number average molecular weights may result in particularly favourable perturbated light-off performance.

Preferably, providing a washcoat slurry further comprises introducing a PGM-fixing agent into the PGM-containing slurry prior to introducing barium ions into the PGM-containing slurry. Advantageously, it has been found that introducing the PGM ions, (the support material,) the PGM-fixing agent, the barium ions and then the chelating agent of formula (1), optionally a binder and a thickening agent, in that order, when providing the washcoat slurry, can provide further improvements to the advantages described herein. Without wishing to be bound by theory, it is thought that this may be because the PGM ions can first form a complex with the PGM-fixing agent on the support material, prior to addition of the barium ions, which may then be more likely to form separate complexes with the chelating agent of formula (1) in the washcoat slurry. This therefore may then allow for the PGM ions and the barium ions to independently be "fixed" to the support material when manufacturing the catalyst article described herein. This may increase the correlation between the resulting PGM-based nanoparticles and the barium-based nanoparticles in the resulting catalyst article, which may in turn increase the ability of the barium to act as a promoter to the PGM species, further improving the catalytic performance of the catalyst article.

In some alternative embodiments, the order of addition of the components of the washcoat slurry, i.e. during the step of providing a washcoat slurry, is not particularly limited. For example, in some embodiments, the order of addition may be, in order, solvent, (at least one) support material, PGM ions, optional PGM-fixing agent, barium ions, chelating agent of formula (1), followed by optional addition of a binder and/or a thickening agent. In some embodiments, the order of addition may be, in order, solvent, barium ions, (at least one) support material, PGM ions, optional PGM-fixing agent, chelating agent of formula (1), followed by optional addition of a binder and/or a thickening agent. The chelating agent of formula (1) may also be introduced prior to addition of the barium ions, such as, in order, solvent, (at least one) support material, PGM ions, optional PGM-fixing agent, chelating agent of formula (1), barium ions, followed by optional addition of a binder and/or a thickening agent; or, in order, solvent, chelating agent of formula (1), barium ions, (at least one) support material, PGM ions, optional PGM-fixing agent, followed by optional addition of a binder and/or a thickening agent; or in order, solvent, PGM ions, (at least one) support material, optional PGM-fixing agent, chelating agent of formula (1), barium ions, followed by optional addition of a binder and/or a thickening agent; or, in order, solvent, PGM ions, chelating agent of formula (1), barium ions, (at least one) support material, optional PGM-fixing agent, followed by optional addition of a binder and/or a thickening agent.

The washcoat slurry (or intermediate slurry, such as the PGM-containing slurry or PGM-and-Ba-containing slurry described herein) is preferably mixed after one or more, preferably each, step of introducing a new component into the slurry, preferably for from 10 minutes to 2 hours, more preferably for from 30 to 90 minutes, more preferably for about an hour.

Preferably, the washcoat slurry comprises the barium ions and the chelating agent of formula (1) in a molar ratio of from 0.5:1 to 4:1, preferably from 1:1 to 3:1, more preferably from 1.5:1 to 2.5:1. Such a ratio may provide for particularly favourable barium "fixing".

Preferably, the washcoat slurry comprises the barium ions and the PGM ions in a molar ratio of from 1:3 to 30:1, preferably from 1:2 to 25:1, more preferably from 1:1 to 20:1, still more preferably from 1.5:1 to 15:1. Such a ratio may provide for a particularly favourable promoter interaction between the PGM species and the barium.

Preferably, the washcoat slurry comprises PGM ions in an amount such that coating the substrate with the washcoat slurry provides a coated substrate comprising from 1 to 200 g/$ft^3$ PGM, based on the total volume of the substrate. In other words, preferably, the coated substrate comprises from 1 to 200 g/$ft^3$ PGM, based on the total volume of the substrate. The loading of PGM is calculated on the basis of the mass of the PGM *per se.*

Preferably, the washcoat slurry comprises barium ions in an amount such that coating the substrate with the washcoat slurry provides a coated substrate comprising from 100 to 500 g/$ft^3$ barium, more preferably from 150 to 450 g/$ft^3$ barium, even more preferably from 200 to 420 g/$ft^3$ barium, based on the total volume of the substrate. In other words, preferably, the coated substrate comprises from 100 to 500 g/$ft^3$ barium, based on the total volume of the substrate. The loading of barium is calculated on the basis of the mass of the barium *per se.*

Preferably, the washcoat slurry comprises the support material in an amount such that coating the substrate with the washcoat slurry provides a coated substrate comprising from 0.1 to 3 g/$in^3$ of the support material, more preferably from 0.2 to 2 g/$in^3$ of the support material, based on the total volume of the substrate. In other words, preferably, the coated substrate comprises from 0.1 to 3 g/$in^3$ of the support material, based on the total volume of the substrate.

Preferably, the washcoat slurry comprises the chelating agent of formula (1) in an amount such that coating the substrate with the washcoat slurry provides a coated substrate comprising from 100 to 600 g/$ft^3$ of the chelating agent of formula (1), such as from 200 to 550 g/$ft^3$ of the chelating agent of formula (1), based on the total volume of the substrate. In other words, preferably, the coated substrate comprises from 100 to 600 g/$ft^3$ of the chelating agent of formula (1), based on the total volume of the substrate.

Preferably, when the washcoat slurry comprises the PGM-fixing agent, the washcoat slurry comprises the PGM-fixing agent in an amount such that coating the substrate with the washcoat slurry provides a coated substrate comprising from 10 to 250 g/$ft^3$ PGM-fixing agent, such as from 40 to 190 g/$ft^3$ PGM-fixing agent, such as from 160 to 180 g/$ft^3$ PGM-fixing agent, based on the total volume of the substrate. In other words, preferably, the coated substrate comprises from 10 to 250 g/$ft^3$ PGM-fixing agent, based on the total volume of the substrate.

The support material may be any suitable support material known to the skilled person. For example, the support material may be any material that is capable of supporting the resulting barium-based and/or PGM-based nanoparticles thereon. The support material may take any form, but is typically in the form of a powder, more typically a high surface area powder. The support material may also serve as an oxygen storage material, which stores and releases oxygen respectively at fuel lean and fuel rich conditions, for facilitating the three-way catalytic conversion or other catalytic application. Of course, it will be appreciated that, unless otherwise specified, one or more different species of support material may be present in the washcoat slurry.

Preferably, the support material comprises an oxide, preferably one or more of $Al_2O_3$ (alumina or aluminium oxide), $SiO_2$, $TiO_2$, $CeO_2$, $ZrO_2$, $CeO_2$-$ZrO_2$, $V_2O_5$, $La_2O_3$ and zeolites. The oxide is preferably a metal oxide. The support material more preferably comprises alumina, preferably gamma-alumina. The support material preferably comprises a ceria-zirconia mixed oxide. In a particularly preferred embodiment, the support material comprises alumina and a ceria-zirconia mixed oxide. The ratio by weight of the alumina to the ceria-zirconia mixed oxide is preferably from 5:1 to 1:5, preferably from 4:1 to 1:4, more preferably from 3:1 to 1:3, even more preferably from 2:1 to 1:2.

The alumina and/or ceria-zirconia mixed oxide is preferably doped. Preferably, the alumina and/or ceria-zirconia mixed oxide is doped with an oxide of one or more of lanthanum, neodymium, yttrium, niobium, praseodymium, hafnium, molybdenum, titanium, vanadium, zinc, cadmium, manganese, iron, copper, calcium, barium, strontium, caesium, magnesium, potassium and sodium, preferably one or more of lanthanum, neodymium, praseodymium and yttrium. Preferably, the dopant is present in the alumina and/or ceria-zirconia mixed oxide in an amount of from 0.001 wt.% to 20 wt.%, preferably from 0.5 wt.% to 10 wt.%, based on the total weight of the alumina and/or mixed oxide and the dopant.

In one preferred embodiment, the support material comprises a zeolite.

Preferably, the support material is in the form of a powder having a D90 of from 0.1 to 25 μm, preferably from 0.5 to 20 μm, more preferably from 1 to 15 μm. The D90 may be the D90 measured before the support material is combined with any other components, such as to provide a slurry. The D90 may be determined by any suitable method, such as by Laser Diffraction Particle Size Analysis using a Malvern Mastersizer 3000, which is a volume-based technique (i.e., D90 may also be referred to as $D_V90$ (or D(v,0.90)) and applies a mathematical Mie theory model to determine a particle size distribution. The laser diffraction system works by determining diameters for the particles based on a spherical approximation. For the particle size measurements by Laser Diffraction Particle Size Analysis, diluted samples were prepared by sonication in distilled water without surfactant for 30 seconds at 35 watts.

Preferably, the washcoat slurry has a solids content of from 10 to 50 %, preferably from 15 to 40 %. Such a solids content may enable slurry rheologies suitable for coating the substrate with the washcoat slurry to provide a coated substrate. For example, if the substrate is a honeycomb monolith, such solid contents may enable the deposition of a thin layer of washcoat onto the inner walls of the substrate. If the substrate is a wall flow filter, such solids contents may enable

the slurry to enter the channels of the wall flow filter and may enable the slurry to enter the walls of the wall flow filter.

Preferably, the slurry further comprises one or more of:

a binder;
an acid or a base;
a thickening agent; and
a reducing agent.

Binders may include, for example, an oxide material with small particle size to bind the individual insoluble particles together in washcoat slurry. The use of binders in washcoats is well known in the art. An alumina-based binder may be particularly preferred.

Thickening agents may include, for example, a natural polymer with functional hydroxyl groups that interacts with insoluble particles in washcoat slurry. It serves the purpose of thickening washcoat slurry for the improvement of coating profile during washcoat coating onto substrate. It is usually burned off during washcoat calcination. Examples of specific thickening agents / rheology modifiers for washcoats include glactomanna gum, guar gum, xanthan gum, curdlan schizophyllan, scleroglucan, diutan gum, Whelan gum, hydroxymethyl cellulose, carboxymethyl cellulose, hydroxyethyl cellulose, methyl cellulose, methyl hydroxyethyl cellulose, methyl hydroxypropyl cellulose and ethyl hydroxycellulose.

The binder and/or the thickening agent may be introduced into the washcoat slurry as the last components of the washcoat slurry, for example.

The term "reducing agent" as described herein may encompass a compound that can reduce the PGM cations to particles in its reduced state or even metallic state *in situ* during washcoat preparation.

An organic acid can be added that acts as a reductant for PGM and/or creates a reducing environment during the washcoat preparation at ambient temperature or elevated temperature (<100°C) within certain period of time. Examples of a suitable organic acid may include citric acid, succinic acid, oxalic acid, ascorbic acid, acetic acid, formic acid, tannic acid, gallic acid, and combinations thereof.

Preferably, coating the substrate with the washcoat slurry to provide a coated substrate comprises contacting the substrate with the washcoat slurry and:

applying a vacuum to the substrate, and/or
drying the washcoat slurry on the substrate. Preferably, the drying occurs:

at a temperature of from 60 °C to 200 °C, preferably from 70 °C to 130 °C; and/or
for from 10 to 360 minutes, preferably from 15 to 60 minutes.

The substrate may be a "blank", *i.e.* un-washcoated, substrate. Alternatively, the substrate may have one or washcoats already loaded thereon. In such a situation, the final catalyst article may comprise multiple layers of different washcoats.

The substrate preferably comprises cordierite. Cordierite substrates are particularly suitable for use in catalyst articles.

Preferably, the substrate comprises a flow-through monolith or a wall-flow filter.

Heating the coated substrate to calcine the washcoat slurry may typically dry and calcine the washcoat slurry. Preferably, the heating (i.e. the heating the coated substrate to calcine the washcoat slurry) is carried out:

at a temperature of from 350 to 700°C, preferably from 400 to 600°C, more preferably from 450 to 550°C; and/or
for from 10 to 120 minutes, preferably from 20 to 60 minutes. Heating the coated substrate to calcine the washcoat slurry may typically result in the formation of palladium nanoparticles as described herein and/or barium carbonate nanoparticles as described herein.

The term "calcination", "calcine", "calcining" and the like as used herein may encompass a thermal treatment process in the absence of, or limited supply of, air or oxygen to bring about a thermal decomposition or change. However, typically, calcination in the present context involves heating in air in a (static or conveyor) oven.

Lower temperatures and/or shorter heating times may result in insufficient decomposition of any organic complexes present in the washcoat slurry and/or may result in high levels of organics remaining in/on the substrate. Higher temperatures and/or longer heating times may lead to the particles of PGM having an unfavourably large particle size, presumably due to sintering. Higher temperatures and longer heating times may also lead to damage to the catalyst article.

Typically, most, if not all, of the organic species present in the washcoat slurry, such as the chelating agent of formula (1) and/or any PGM-fixing agent may be "burnt off" during the heating step. Accordingly, such compounds may not

be detectable in the final catalyst article. The PGM ions may typically form PGM nanoparticles, such as PGM oxide nanoparticles may form during the heating step. The barium ions may typically form barium carbonate nanoparticles during the heating step. The barium carbonate nanoparticles may form barium oxide nanoparticles after further ageing.

Following the heating step, the substrate is typically cooled, more typically to room temperature. The cooling is typically carried out in air with or without cooling agent/media, typically without cooling agent.

In one embodiment, the method further comprises coating the coated substrate with a further washcoat slurry, the further washcoat slurry preferably comprising a support material and PGM ions, preferably Rh ions.

In a further aspect, provided is a method of manufacturing a catalyst article, the method comprising:

providing a substrate;
providing a washcoat slurry, the washcoat slurry comprising a solvent, a support material, platinum group metal (PGM) ions, barium ions and an aminopolycarboxylate chelating agent, and optionally a binder and/or a thickening agent;
coating the substrate with the washcoat slurry to provide a coated substrate; and
heating the coated substrate to calcine the washcoat slurry. As will be appreciated by the skilled reader, the advantages and preferable features of the above aspects apply equally to this aspect, unless specified otherwise. The aminopolycarboxylate chelating agent is preferably defined by formula (1).

In a further aspect, provided is a washcoat slurry comprising a solvent, a support material, platinum group metal (PGM) ions, barium ions and a chelating agent of formula (1):

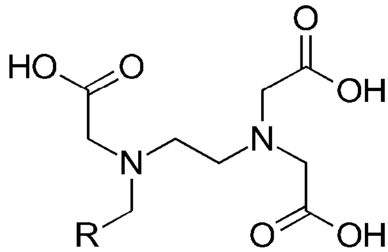,

wherein R is $CH_2OH$, COOH or

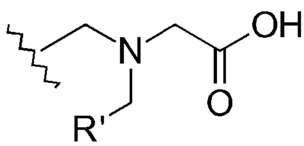,

wherein R' is $CH_2OH$ or COOH. As will be appreciated by the skilled reader, the advantages and preferable features of the above aspect apply equally to this aspect, unless specified otherwise.

In a further aspect, provided is a catalyst article obtained or obtainable by the method of the above aspect, the catalyst article for use in an emission treatment system. As will be appreciated by the skilled reader, the advantages and preferable features of the above aspects apply equally to this aspect, unless specified otherwise.

In a further aspect, provided is a catalyst article for use in an emissions treatment system, the catalyst article comprising:

a substrate; and
a first catalytic region on the substrate;
wherein the first catalytic region comprises a support material, palladium nanoparticles and barium carbonate nanoparticles; and
wherein the palladium nanoparticles have a mean crystallite size of from 5 to 25 nm and the barium carbonate nanoparticles have a mean crystallite size of from 25 to 36 nm.

As will be appreciated by the skilled reader, the advantages and preferable features of the above aspects apply equally to this aspect, unless specified otherwise.

Without wishing to be bound by theory, it is thought that the optimized particle sizes having similar barium carbonate and palladium (oxide) sizes may correspond to improved TWC performance as described herein.

Preferably, the palladium nanoparticles have a mean crystallite size of from 5 to 15 nm (such as from 8 to 14 nm) and/or the barium carbonate nanoparticles have a mean crystallite size of from 30 to 35 nm. Without wishing to be bound by theory, it is thought that the method described herein may enable such a catalyst article to be prepared. Such mean crystallite sizes may contribute to providing the advantages described herein.

Unless otherwise specified, the mean crystallite size when referring to the palladium nanoparticles may typically be measured by standard pulse CO chemisorption. Suitable techniques are known to the skilled reader. The measurement may be made after pretreatment of the fresh catalyst powder in 10% $H_2$ in Ar at 400°C for 30 minutes, followed by CO pulse chemisorption at 35°C. A stoichiometry factor of CO-to-Pd ratio of 1 may be used for the Pd mean crystallite size calculation.

Unless otherwise specified, the mean crystallite size when referring to the barium carbonate nanoparticles may typically be the XRD mean crystallite size calculated by the Scherrer equation using full width at half maximum of a diffraction peak measured in powder XRD of the sample. Unless otherwise described herein, any mean crystallite size described herein may be measured by X-ray diffraction (XRD). Suitable techniques are known in the art. For example, such a technique may be described as follows. To acquire the X-ray diffraction data, an X'Pert Pro MPD diffractometer can be used with the BraggBrentano$^{HD}$ mirror, ¼° divergent slit, 20mm mask, sample spinner, and the PIXcel detector. A triplicate scan can be performed over the range 5° to 115°, a 0.02° step size, and a 50min total scan time. The data can be analysed using the HighScore Plus software. The transition alumina phase can be modelled using partial or not known crystal structure method (N. V.Y. SCARLETT and I.C. MADSEN, Quantification of phases with partial or not known crystal structure, Powder Diffraction (2006), 21(4), 278-284, which is incorporated herein by reference) and all other phases can be modelled using Rietveld. Mean crystallite size and strain can be measured based on the Pseudo-Voigt profile function and can be corrected for instrument broadening. Any arbitrary sample of the first catalytic region (or other region, as required) can be used to take the measurement. Mean crystallite size measured by XRD is a common parameter for determining nanoparticle sizes of such species in the field of the present invention.

The term "palladium nanoparticles" as used herein may encompass "palladium-based nanoparticles". This is because, as will be appreciated, the palladium nanoparticles may be in the form of palladium oxide nanoparticles. In general, the term "nanoparticle" as used herein may encompass a particle having a diameter of from 0.01 nm to 100 nm as measured by TEM. The nanoparticles may be in any shape, *e.g.* a sphere, a plate, cubic, cylindrical, hexagonal or a rod, but are typically spherical.

Preferably, the palladium nanoparticles are present as the only PGM nanoparticles in the first catalytic region. In other words, preferably, the first catalytic region comprises PGM nanoparticles and the PGM nanoparticles consist of palladium nanoparticles.

Preferably, the first catalytic region does not comprise barium sulfate nanoparticles.

Preferably, when a cross section of the first catalytic region of the catalyst article is subjected to area analysis by FE-EPMA under conditions of pixel (section) size of 0.34 $\mu$m $\times$ 0.34 $\mu$m and number of measured pixels (sections) of 256 $\times$ 256, a characteristic X-ray intensity ($\alpha$: cps) of the barium (Ba) and a characteristic X-ray intensity ($\beta$: cps) of the palladium (Pd) are measured for each pixel, and the Pearson correlation coefficient calculated using the resulting $\alpha$ and $\beta$ in each pixel is designated as $R_{Ba/Pd}$, then the value of $R_{Ba/Pd}$ is at least 0.60, preferably at least 0.65, more preferably at least 0.67, even more preferably at least 0.70, still more preferably at least 0.75, still more preferably at least 0.78. Without wishing to be bound by theory, it is thought that it may be possible to achieve the higher correlation $R_{Ba/Pd}$ values by the method involving independently fixing both the barium and the PGM (Pd). Higher Ba/Pd correlation is thought to correspond to improved TWC performance as described herein.

Unless otherwise specified, the cross section of the first catalytic region of the catalyst article may be taken in a plane perpendicular to the axial direction of the substrate. Any arbitrary cross section may be taken, such as 1 inch from an axial end of the substrate, such as the inlet end of the substrate. The Pearson correlation coefficient (product moment correlation coefficient) is known to the skilled person and is calculated based on the results of area analysis by FE-EPMA. The correlation coefficient $R_{Ba/Pd}$ is determined by the formula: $R_{Ba/Pd}$ = (covariance)/(standard deviation of $\alpha\times$standard deviation of $\beta$), wherein the first variable ($\alpha$) is a characteristic X-ray intensity of the barium (Ba) and the second variable ($\beta$) is a characteristics X-ray intensity of the palladium (Pd) in area analysis by FE-EPMA. Such a calculation is known to the skilled person. In other words, preferably, the barium and the palladium are highly correlated in such a catalyst article. That is, the barium may be present in a highly dispersed state with reference to the distribution of the palladium on the substrate. Thus, the ability of the barium to act as a promoter species for the palladium may be optimised.

The first catalytic region is on the substrate. In other words, the first catalytic region may be disposed on the substrate. By "disposed on" it is meant that the region (or coating) is directly disposed on the substrate, i.e. with no intervening material, and/or indirectly disposed on the substrate, i.e. with intervening material, such as another region (or coating). The term "disposed on" encompasses having the region (or coating) disposed on the substrate (i.e. be located "on-wall"). The term "disposed on" may also encompass having the region (or coating) disposed therein, for example within the pores of the substrate (e.g. "in-wall", within the porous walls). In other words, the term "disposed on" the substrate means that the region (or coating) may be disposed thereon and/or therein. In other words, the region (or coating)

may be "in-wall", "on-wall", or both "in wall" and "on wall". Preferably, the catalytic region is a coating, i.e. a washcoat coating.

The catalyst article is preferably for three-way catalysis.

Preferably, the first catalytic region comprises from 1 to 200 g/$ft^3$ palladium, based on the total volume of the substrate. The loading of palladium is calculated on the basis of the mass of the palladium *per se.*

Preferably, the first catalytic region comprises from 100 to 500 g/$ft^3$ barium, more preferably from 150 to 450 g/$ft^3$ barium, even more preferably from 200 to 420 g/$ft^3$ barium, based on the total volume of the substrate. The loading of barium is calculated on the basis of the mass of the barium *per se.*

Preferably, the first catalytic region comprises from 0.1 to 3 g/$in^3$ of the support material, more preferably from 0.2 to 2 g/$in^3$ of the support material, based on the total volume of the substrate.

Preferably, the first catalytic region is present on the substrate at a loading of from 0.5 to 4 g/$in^3$, more preferably from 1 to 3.5 g/$in^3$, based on the total volume of the substrate.

In one embodiment, the catalyst article further comprises a second catalytic region, wherein the second catalytic region comprises a support material and Rh nanoparticles. Preferably, the first catalytic region is provided as a bottom layer in direct contact with the substrate, and the second catalytic region is provided as a layer at least partially overlying the first catalytic region. Preferably, the second catalytic region comprises from 1 to 15 g/$ft^3$ rhodium, preferably from 2 to 10 g/$ft^3$ rhodium, based on the total volume of the substrate.

In a further aspect, provided is an emission treatment system comprising the catalyst article described herein. As will be appreciated by the skilled reader, the advantages and preferable features of the above aspects apply equally to this aspect, unless specified otherwise.

Preferably, the emission treatment system is for a gasoline engine. Preferably, the gasoline engine operates under stoichiometric conditions.

In a further aspect, provided is a method of treating an exhaust gas, the method comprising:

providing the catalyst article described herein; and
contacting the catalyst article with an exhaust gas. As will be appreciated by the skilled reader, the advantages and preferable features of the above aspects apply equally to this aspect, unless specified otherwise.

Preferably, the exhaust gas is from a gasoline engine. Preferably, the gasoline engine operates under stoichiometric conditions. Typically, contacting the catalyst article with an exhaust gas may comprise flowing the exhaust gas through the catalyst article.

The term "region" as used herein refers to an area on a substrate, typically obtained by drying and/or calcining a washcoat. A "region" can, for example, be disposed or supported on a substrate as a "layer" or a "zone". The area or arrangement on a substrate is generally controlled during the process of applying the washcoat to the substrate. The "region" typically has distinct boundaries or edges (i.e. it is possible to distinguish one region from another region using conventional analytical techniques).

Typically, the "region" has a substantially uniform length. The reference to a "substantially uniform length" in this context refers to a length that does not deviate (e.g. the difference between the maximum and minimum length) by more than 10 %, preferably does not deviate by more than 5 %, more preferably does not deviate by more than 1 %, from its mean value.

It is preferable that each "region" has a substantially uniform composition (i.e. there is no substantial difference in the composition of the washcoat when comparing one part of the region with another part of that region). Substantially uniform composition in this context refers to a material (e.g. region) where the difference in composition when comparing one part of the region with another part of the region is 5% or less, usually 2.5% or less, and most commonly 1% or less.

The term "zone" as used herein refers to a region having a length that is less than the total length of the substrate, such as $\leq$ 75 % of the total length of the substrate. A "zone" typically has a length (i.e. a substantially uniform length) of at least 5% (e.g. $\geq$ 5 %) of the total length of the substrate.

The total length of a substrate is the distance between its inlet end and its outlet end (e.g. the opposing ends of the substrate).

Any reference to a "zone disposed at an inlet end of the substrate" used herein refers to a zone disposed or supported on a substrate where the zone is nearer to an inlet end of the substrate than the zone is to an outlet end of the substrate. Thus, the midpoint of the zone (i.e. at half its length) is nearer to the inlet end of the substrate than the midpoint is to the outlet end of the substrate. Similarly, any reference to a "zone disposed at an outlet end of the substrate" used herein refers to a zone disposed or supported on a substrate where the zone is nearer to an outlet end of the substrate than the zone is to an inlet end of the substrate. Thus, the midpoint of the zone (i.e. at half its length) is nearer to the outlet end of the substrate than the midpoint is to the inlet end of the substrate.

When the substrate is a wall-flow filter, then generally any reference to a "zone disposed at an inlet end of the substrate" refers to a zone disposed or supported on the substrate that is:

(a) nearer to an inlet end (e.g. open end) of an inlet channel of the substrate than the zone is to a closed end (e.g. blocked or plugged end) of the inlet channel, and/or
(b) nearer to a closed end (e.g. blocked or plugged end) of an outlet channel of the substrate than the zone is to an outlet end (e.g. open end) of the outlet channel.

Thus, the midpoint of the zone (i.e. at half its length) is (a) nearer to an inlet end of an inlet channel of the substrate than the midpoint is to the closed end of the inlet channel, and/or (b) nearer to a closed end of an outlet channel of the substrate than the midpoint is to an outlet end of the outlet channel.
Similarly, any reference to a "zone disposed at an outlet end of the substrate" when the substrate is a wall-flow filter refers to a zone disposed or supported on the substrate that is:

(a) nearer to an outlet end (e.g. an open end) of an outlet channel of the substrate than the zone is to a closed end (e.g. blocked or plugged) of the outlet channel, and/or
(b) nearer to a closed end (e.g. blocked or plugged end) of an inlet channel of the substrate than it is to an inlet end (e.g. an open end) of the inlet channel.

Thus, the midpoint of the zone (i.e. at half its length) is (a) nearer to an outlet end of an outlet channel of the substrate than the midpoint is to the closed end of the outlet channel, and/or (b) nearer to a closed end of an inlet channel of the substrate than the midpoint is to an inlet end of the inlet channel.
A zone may satisfy both (a) and (b) when the washcoat is present in the wall of the wall-flow filter (i.e. the zone is in-wall).
The relative terms "first", "second", etc. as used herein are simply labels and are not intended to indicate the relative arrangement of the coatings or other features, unless stated otherwise.
As will be appreciated, the term "consists essentially of" or "consisting essentially of" as used herein may encompass that further components other than those listed may be present, provided that they do not materially affect the essential characteristics of the species or composition.
The invention will now be described in relation to the following non-limiting examples.

Manufacture of catalyst articles

**Reference Catalyst 1**: **Ref. Pd-TWC without Pd or Ba fixing**

Reference Catalyst 1 is a single-layered TWC, coated on a ceramic substrate (400 cells per square inch (cpsi)). Catalyst region consists of Pd and Ba species supported on a washcoat of La-stabilized alumina, CeZr mixed oxide, using Pd nitrate and Ba acetate precursors. The washcoat loading of catalytic region was about 2 g/in$^3$, with a Pd loading of 131 g/ft$^3$, and Ba loading of 400 g/ft$^3$.

**Example Catalyst 1: Pd-TWC with Ba-DTPA**

Example Catalyst 1 is a single-layered TWC, coated on a ceramic substrate (400 cpsi). Catalyst region consists of Pd and Ba species supported on a washcoat of La-stabilized alumina, CeZr mixed oxide, using Pd nitrate and Ba acetate precursors. In addition, DTPA with a loading at 483 g/ft$^3$ was added to intentionally fix Ba to create more uniformed Ba distribution in washcoat. The washcoat loading of catalytic region was about 2 g/in$^3$, with a Pd loading of 131 g/ft$^3$, and Ba loading of 400 g/ft$^3$.

**Reference Catalyst 2: Ref. Pd-TWC with Pd fixed, without Ba fixing**

Reference Catalyst 2 is a single-layered TWC, coated on a ceramic substrate (400 cpsi). Catalyst region consists of Pd and Ba species supported on a washcoat of La-stabilized alumina, CeZr mixed oxide, using Pd nitrate and Ba acetate precursors. In addition, Pd was fixed on the supports. The washcoat loading of catalytic region was about 2 g/in$^3$, with a Pd loading of 131 g/ft$^3$, and Ba loading of 400 g/ft$^3$.

**Comparative Catalyst 1: Pd-TWC with Pd fixed, and Ba-Citric acid**

Comparative Catalyst 1 is a single-layered TWC, coated on a ceramic substrate (400 cpsi). Catalyst region consists of Pd and Ba species supported on a washcoat of La-stabilized alumina, CeZr mixed oxide, using Pd nitrate and Ba acetate precursors. In addition, Pd was fixed on the supports, and Citric acid with a loading at 560 g/ft$^3$ was added to intentionally fix Ba to create more uniformed Ba distribution in washcoat. The washcoat loading of catalytic region was

about 2 g/in$^3$, with a Pd loading of 131 g/ft$^3$, and Ba loading of 400 g/ft$^3$.

**Example Catalyst 2: Pd-TWC with Pd fixed, and Ba-EDTA**

Example Catalyst 2 is a single-layered TWC, coated on a ceramic substrate (400 cpsi). Catalyst region consists of Pd and Ba species supported on a washcoat of La-stabilized alumina, CeZr mixed oxide, using Pd nitrate and Ba acetate precursors. In addition, Pd was fixed on the supports, and EDTA with a loading at 426 g/ft$^3$ was added to intentionally fix Ba to create more uniformed Ba distribution in washcoat. The washcoat loading of catalytic region was about 2 g/in$^3$, with a Pd loading of 131 g/ft$^3$, and Ba loading of 400 g/ft$^3$.

**Example Catalyst 3: Pd-TWC with Pd fixed and Ba-DTPA**

Example Catalyst 3 is a single-layered TWC, coated on a ceramic substrate (400 cpsi). Catalyst region consists of Pd and Ba species supported on a washcoat of La-stabilized alumina, CeZr mixed oxide, using Pd nitrate and Ba acetate precursors. In addition, Pd was fixed on the supports, and DTPA with a loading at 573 g/ft$^3$ was added to intentionally fix Ba to create more uniformed Ba distribution in washcoat. The washcoat loading of catalytic region was about 2 g/in$^3$, with a Pd loading of 131 g/ft$^3$, and Ba loading of 400 g/ft$^3$.

**Reference Catalyst 3: Ref. Pd-TWC with Pd fixed, without Ba fixing**

Reference Catalyst 3 is a single-layered TWC, coated on a ceramic substrate (400 cpsi). Catalyst region consists of Pd and Ba species supported on a washcoat of La-stabilized alumina, CeZr mixed oxide, using Pd nitrate and Ba acetate precursors. In addition, Pd was fixed on the supports. The washcoat loading of catalytic region was about 1.8 g/in$^3$, with a Pd loading of 40 g/ft$^3$, and Ba loading of 300 g/ft$^3$.

**Comparative Catalyst 2: Pd-TWC with Pd fixed, and Ba-Citric acid**

Comparative Catalyst 2 is a single-layered TWC, coated on a ceramic substrate (400 cpsi). Catalyst region consists of Pd and Ba species supported on a washcoat of La-stabilized alumina, CeZr mixed oxide, using Pd nitrate and Ba acetate precursors. In addition, Pd was fixed on the supports, and Citric acid with a loading at 420 g/ft$^3$ was added to intentionally fix Ba to create more uniformed Ba distribution in washcoat. The washcoat loading of catalytic region was about 1.8 g/in$^3$, with a Pd loading of 40 g/ft$^3$, and Ba loading of 300 g/ft$^3$.

**Example Catalyst 4: Pd-TWC with Pd fixed, and Ba-DTPA**

Example Catalyst 4 is a single-layered TWC, coated on a ceramic substrate (400 cpsi). Catalyst region consists of Pd and Ba species supported on a washcoat of La-stabilized alumina, CeZr mixed oxide, using Pd nitrate and Ba acetate precursors. In addition, Pd was fixed on the supports, and DTPA with a loading at 430 g/ft$^3$ was added to intentionally fix Ba to create more uniformed Ba distribution in washcoat. The washcoat loading of catalytic region was about 1.8 g/in$^3$, with a Pd loading of 40 g/ft$^3$, and Ba loading of 300 g/ft$^3$.

**Reference Catalyst 4: Ref. Bimetal-TWC with Pd fixed, without Ba fixing**

Reference Catalyst 4 is a double-layered TWC, coated on a ceramic substrate (400 cpsi). Catalyst bottom layer region consists of Pd and Ba species supported on a washcoat of La-stabilized alumina, CeZr mixed oxide, using Pd nitrate and Ba acetate precursors. In addition, Pd was fixed on the supports. The washcoat loading of bottom layer catalytic region was about 1.8 g/in$^3$, with a Pd loading of 40 g/ft$^3$, and Ba loading of 300 g/ft$^3$. Catalyst top layer region consists of Rh species supported on a washcoat of La-stabilized alumina, CeZr mixed oxide, using Rh nitrate precursor. The washcoat loading of top layer catalytic region was about 2 g/in$^3$, with a Rh loading of 3 g/ft$^3$.

**Example Catalyst 5: Bimetal-TWC with Pd fixed, and Ba-DTPA**

Example Catalyst 5 is a double-layered TWC, coated on a ceramic substrate (400 cpsi). Catalyst bottom layer region consists of Pd and Ba species supported on a washcoat of La-stabilized alumina, CeZr mixed oxide, using Pd nitrate and Ba acetate precursors. In addition, Pd was fixed on the supports, and DTPA with a loading at 570 g/ft$^3$ was added to intentionally fix Ba to create more uniformed Ba distribution in washcoat. The washcoat loading of bottom layer catalytic region was about 1.8 g/in$^3$, with a Pd loading of 40 g/ft$^3$, and Ba loading of 300 g/ft$^3$. Catalyst top layer region consists of Rh species supported on a washcoat of La-stabilized alumina, CeZr mixed oxide, using Rh nitrate precursor. The washcoat

loading of top layer catalytic region was about 2 g/in$^3$, with a Rh loading of 3 g/ft$^3$.

Pearson correlation coefficients

The Pearson correlation coefficients (product moment correlation coefficient) are calculated based on the elemental area analysis by FE-EPMA as described above, and the results are shown in **FIG. 1** and **FIG. 2.**

**FIG. 1** shows that compared to Reference Catalyst 1 without Pd fixing or Ba fixing, Example Catalyst 1 with DTPA applied showed significantly increased Pd-Ba colocation, suggesting enhanced Ba fixing by DTPA.

**FIG. 2** shows that compared to Reference Catalyst 2 with Pd fixing but without Ba fixing, Comparative Catalyst 1 with Citric acid further applied showed decreased Pd-Ba colocation, suggesting Citric acid is not effective for Ba fixing; while both Example Catalyst 2 (with EDTA further applied) and Example Catalyst 3 (with DTPA further applied) showed increased Pd-Ba colocation. This means both EDTA and DTPA were able to effectively fix Ba (increase Ba distribution within washcoat) while Pd is universally distributed by Pd fixing. Specifically, DTPA showed even more effective Ba fixing than EDTA. Thus, the ability of Ba to act as a promoter species for Pd may be optimized when Pd and Ba-DTPA are both applied to washcoat.

Mean crystallite sizes

**Table 1**

| Catalyst Article | Crystallite size (nm) | |
|---|---|---|
| | $BaCO_3$ (as fresh) | Pd (reduced fresh) |
| Reference Catalyst 2 | 62.3 | 16.5 |
| Comparative Catalyst 1 | 37.4 | 18.2 |
| Example Catalyst 2 | 34.1 | 12.4 |
| Example Catalyst 3 | 32.1 | 9.3 |

**Table 1** shows mean crystallite size analysis of key components including $BaCO_3$ (Witherite) in the fresh catalysts based on powder XRD, as well as Pd based in the fresh catalysts (with prereduction) on CO Chemisorption. The mean crystallite size of $BaCO_3$ is calculated based on Scherrer equation with parameters extracted from powder XRD pattern, as described above. The mean crystallite size of Pd is measured and calculated by standard pulse CO chemisorption, after pretreatment of the fresh catalyst powder in $H_2$-contianing flow at 400°C as described above.

Compared to Reference Catalyst 2 with Pd fixed and without Ba fixing, Comparative Catalyst 1 and Example Catalysts 2 and 3 with further application of Citric acid, EDTA, or DTPA all significantly reduced final $BaCO_3$ particle size in the fresh catalysts. Without wishing to be bound by theory, this is thought to be mainly due to the chelating effect of these carboxylic-based ligands with $Ba^{2+}$ during washcoat batching, creating finer Ba species in the fresh catalysts. Specifically, $BaCO_3$ particle size is mostly reduced by EDTA and DTPA, in particular DTPA.

For Pd particle size, further application of Citric acid slightly increased Pd particle size (in Comparative Catalyst 1), and further application of EDTA (in Example Catalyst 2) and DTPA (in Example Catalyst 3) resulted in smaller Pd particle sizes, as compared to Reference Catalyst 2. This suggests additional chelation between EDTA/DTPA and $Pd^{2+}$ during washcoat batching, creating finer Pd species in the fresh catalysts, which may be an additional benefit of using these types of ligands other than Ba fixing.

Performance Test Example (I)

Reference Catalyst 1 and Example Catalyst 1 Pd-TWC catalysts were further aged under high-temperature thermal redox aging condition, at 1000 °C for 40 hrs, with 2-mode perturbation between "Rich" (80 sec) and "Air" (20 sec) gas conditions.

The above Pd-TWC catalysts after redox aging were tested separately over a Synthetic Catalyst Activity Test (SCAT) device for TWC Light-off tests. The Light-off tests were performed with a perturbed gas flow switched from rich-to-lean-to... at a frequency of 1Hz. The test was run from room temperature to 600°C at a ramp rate of 20°C/min, at a GHSV of 200,000 $hr^{-1}$. An FTIR was used to continuously measure the gas product composition during the test. Before the light off tests, rich- or lean-pretreatment was applied to catalysts. The conversions of HC, CO and $NO_x$ were calculated from comparing the concentration of the feed gas and the gas at the outlets of the catalysts.

**Table 2**

| Catalyst Article | $NO_x$_$T_{50}$ (°C) | CO_$T_{50}$ (°C) | THC_$T_{50}$ (°C) |
|---|---|---|---|
| Reference Catalyst 1 | 307 | 296 | 291 |
| Example Catalyst 1 | 295 | 283 | 282 |

**Table 2** showed $T_{50}$s of $NO_x$, CO, and THC conversions during TWC light-off performance of Reference Catalyst 1 and Example Catalyst 1 Pd-TWCs after 2-mode redox aging at 1000 °C for 40 hr. Compared to Reference Catalyst 1, significantly improved aged TWC light-off activity was achieved with adding DTPA to the washcoat due to enhanced Ba fixing in Example Catalyst 1.

Performance Test Example (II)

Reference Catalyst 3, Comparative Catalyst 2 and Example Catalyst 4 Pd-TWC catalysts were further evaluated under the same aging and test conditions as described in Performance Example (I).

**Table 3**

| Catalyst Article | $NO_x$_$T_{50}$ (°C) | CO_$T_{50}$ (°C) | THC_$T_{50}$ (°C) | $NO_x$_$T_{75}$ (°C) | CO_$T_{75}$ (°C) | THC_$T_{75}$ (°C) |
|---|---|---|---|---|---|---|
| Reference Catalyst 3 | 359 | 326 | 326 | 401 | 355 | 345 |
| Comparative Catalyst 2 | 343 | 328 | 324 | 419 | 341 | 333 |
| Example Catalyst 4 | 331 | 314 | 313 | 392 | 330 | 322 |

**Table 3** showed $T_{50}$s and $T_{75}$s of $NO_x$, CO, and THC conversions during TWC light-off performance of Reference Catalyst 3, Comparative Catalyst 2 and Example Catalyst 4 Pd-TWCs after 2-mode redox aging at 1000 °C for 40 hr. Compared to Reference Catalyst 3, improved CO and THC conversions were found with adding additional Citric acid to the washcoat, but inferior NOx conversion at high temperature region (Comparative Catalyst 2). For Example Catalyst 4, significantly improved aged TWC light-off activity was achieved with adding DTPA to the washcoat due to enhanced Ba fixing, as reflected by both $T_{50}$s and $T_{75}$s.

Performance Test Example (III)

Reference Catalyst 4 and Example Catalyst 5 Bimetal-TWC catalysts were further evaluated under engine bench aging for 50 hrs, followed by engine bench cycle. The results are shown in **FIG. 3.**

**FIG. 3** shows that compared to Reference Catalyst 4 with only Pd fixed and without Ba fixing, Example Catalyst 5 showed significantly improved engine THC conversion with the additional Ba-DTPA applied.

The foregoing detailed description has been provided by way of explanation and illustration, and is not intended to limit the scope of the appended claims. Many variations in the presently preferred embodiments illustrated herein will be apparent to one of ordinary skill in the art and remain within the scope of the appended claims and their equivalents.

## Claims

**1.** A method of manufacturing a catalyst article, the method comprising:

providing a substrate;
providing a washcoat slurry, the washcoat slurry comprising a solvent, a support material, platinum group metal (PGM) ions, barium ions and a chelating agent of formula (1);
coating the substrate with the washcoat slurry to provide a coated substrate; and
heating the coated substrate to calcine the washcoat slurry;
wherein formula (1) is defined by:

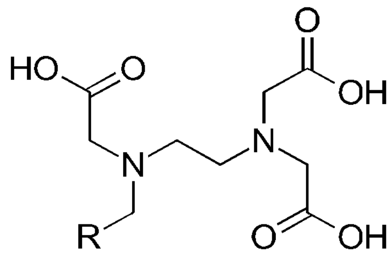

,

wherein R is $CH_2OH$, COOH or

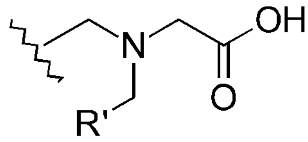

,

wherein R' is $CH_2OH$ or COOH.

2. The method of claim 1, wherein the chelating agent of formula (1) comprises ethylenediaminetetraacetic acid (EDTA), hydroxyethylethylenediaminetriacetic acid (HEDTA) and/or diethylenetriamine pentaacetic acid (DTPA), preferably wherein the chelating agent of formula (1) comprises DTPA.

3. The method of claim 1 or claim 2, wherein the PGM comprises one or more of Rh, Pt and Pd, preferably Pd.

4. The method of any preceding claim, wherein providing a washcoat slurry comprises:

   providing a PGM-containing slurry comprising a solvent, a support material and PGM ions;
   introducing barium ions into the PGM-containing slurry to provide a PGM-and-Ba-containing slurry;
   introducing a chelating agent of formula (1) to the PGM-and-Ba-containing slurry.

5. The method of any preceding claim, wherein the washcoat slurry further comprises a PGM-fixing agent, preferably wherein the PGM-fixing agent comprises one or more of a polyphenol comprising an ester functional group, and gallic acid.

6. The method of any preceding claim, wherein the support material comprises alumina, preferably gamma-alumina.

7. The method of any preceding claim, wherein the support material comprises a ceria-zirconia mixed oxide.

8. The method of any preceding claim, wherein the support material comprises alumina and a ceria-zirconia mixed oxide.

9. The method of any of claims 6 to 8, wherein the alumina and/or ceria-zirconia mixed oxide is doped.

10. The method of claim 9, wherein the alumina and/or ceria-zirconia mixed oxide is doped with an oxide of one or more of lanthanum, neodymium, yttrium, niobium, praseodymium, hafnium, molybdenum, titanium, vanadium, zinc, cadmium, manganese, iron, copper, calcium, barium, strontium, caesium, magnesium, potassium and sodium, preferably one or more of lanthanum, neodymium, praseodymium and yttrium.

11. The method of any preceding claim, wherein the support material comprises a zeolite.

12. The method of any preceding claim, wherein the substrate comprises a flow-through monolith or a wall-flow filter.

13. A washcoat slurry comprising a solvent, a support material, platinum group metal (PGM) ions, barium ions and a chelating agent of formula (1):

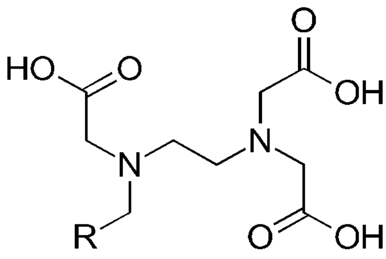
,

wherein R is $CH_2OH$, COOH or

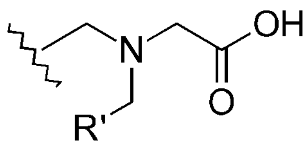
,

wherein R' is $CH_2OH$ or COOH.

**14.** A catalyst article for use in an emissions treatment system, the catalyst article comprising:

a substrate; and
a first catalytic region on the substrate;
wherein the first catalytic region comprises a support material, palladium nanoparticles and barium carbonate nanoparticles; and
wherein the palladium nanoparticles have a mean crystallite size of from 5 to 25 nm and the barium carbonate nanoparticles have a mean crystallite size of from 25 to 36 nm.

**15.** The catalyst article of claim 14, wherein when a cross section of the first catalytic region of the catalyst article is subjected to area analysis by FE-EPMA under conditions of pixel (section) size of 0.34 $\mu$m $\times$ 0.34 $\mu$m and number of measured pixels (sections) of 256 $\times$ 256, a characteristic X-ray intensity ($\alpha$: cps) of the barium (Ba) and a characteristic X-ray intensity ($\beta$: cps) of the palladium (Pd) are measured for each pixel, and the Pearson correlation coefficient calculated using the resulting $\alpha$ and $\beta$ in each pixel is designated as $R_{Ba/Pd}$, then the value of $R_{Ba/Pd}$ is at least 0.60.

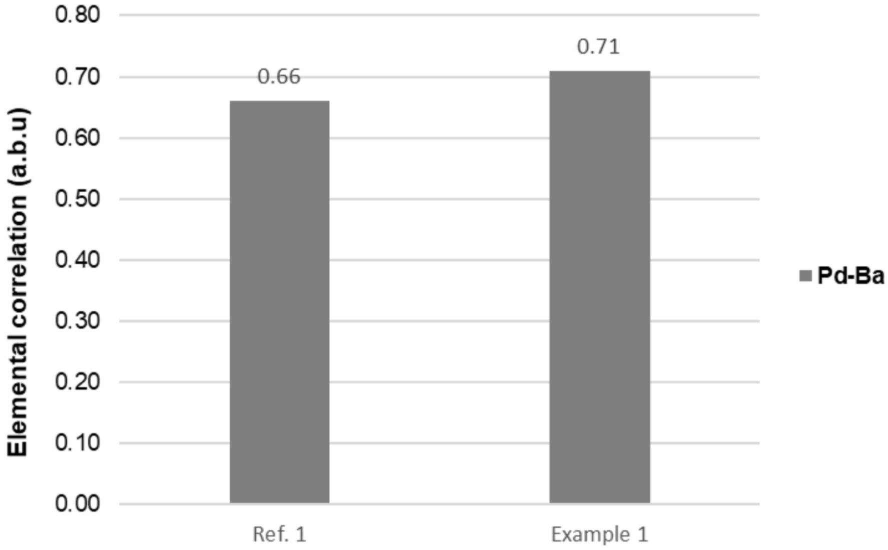
Elemental correlation (a.b.u)
0.80
0.70
0.60
0.50
0.40
0.30
0.20
0.10
0.00
0.66
0.71
Ref. 1
Example 1
Pd-Ba

FIG. 1

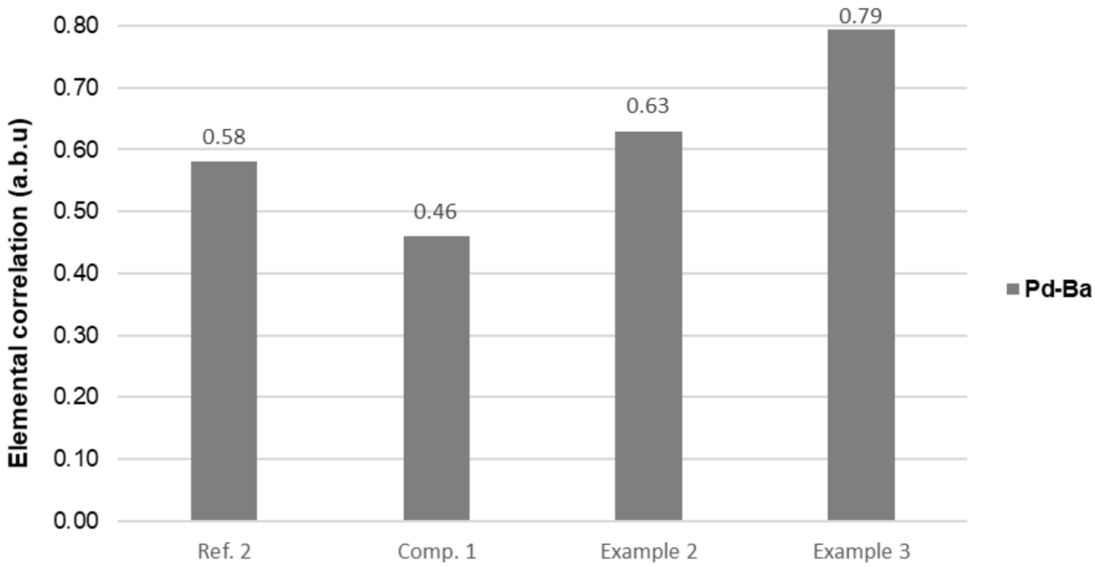
Elemental correlation (a.b.u)
0.80
0.70
0.60
0.50
0.40
0.30
0.20
0.10
0.00
0.58
0.46
0.63
0.79
Ref. 2
Comp. 1
Example 2
Example 3
Pd-Ba

FIG. 2

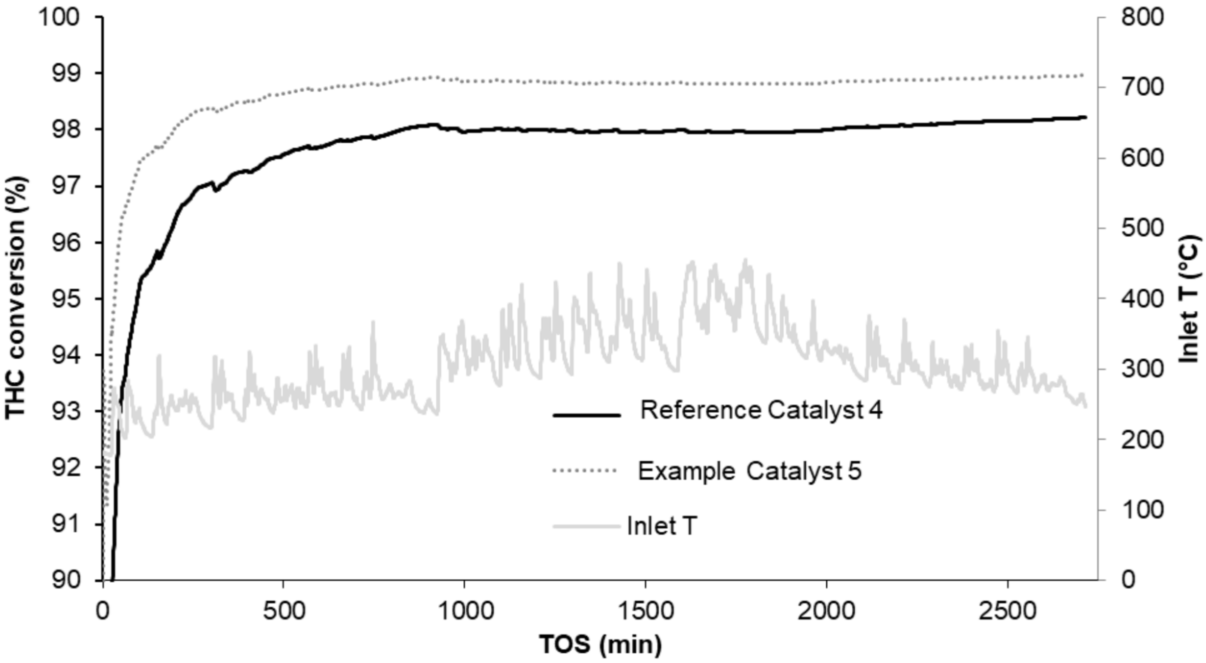
100
99
98
97
96
95
94
93
92
91
90
THC conversion (%)
800
700
600
500
400
300
200
100
0
Inlet T (°C)
0
500
1000
1500
2000
2500
TOS (min)
Reference Catalyst 4
Example Catalyst 5
Inlet T

FIG. 3

Europäisches Patentamt
European Patent Office
Office européen des brevets

# EUROPEAN SEARCH REPORT

Application Number
EP 26 15 0602

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 11 786 885 B2 (JOHNSON MATTHEY PLC [GB]) 17 October 2023 (2023-10-17)<br>* reference catalyst 1;<br>table 1 *<br>* table 2 *<br>* inventive catalyst 1;<br>column 21, line 23 - line 46 *<br>* column 20, line 48 - line 59 *<br>----- | 1-15 | INV.<br>B01J23/58<br>B01J35/30<br>B01J37/02<br>B01J23/46<br>B01J35/57<br>B01D53/94 |
| X | EP 4 414 053 A1 (JOHNSON MATTHEY PLC [GB]) 14 August 2024 (2024-08-14)<br>* Inventive Catalyst 1;<br>paragraphs [0149] - [0151] *<br>----- | 1-13 | |
| A,D | WO 2022/258962 A1 (JOHNSON MATTHEY PLC [GB]) 15 December 2022 (2022-12-15)<br>* example 1 *<br>----- | 1-15 | |

TECHNICAL FIELDS SEARCHED (IPC)

B01J
B01D

The present search report has been drawn up for all claims

1

| Place of search | Date of completion of the search | Examiner |
|---|---|---|
| Munich | 26 February 2026 | Beckmann, Oliver |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
........................................................
& : member of the same patent family, corresponding document

EPO FORM 1503 03.82 (P04C01)

# ANNEX TO THE EUROPEAN SEARCH REPORT ON EUROPEAN PATENT APPLICATION NO.

EP 26 15 0602

This annex lists the patent family members relating to the patent documents cited in the above-mentioned European search report. The members are as contained in the European Patent Office EDP file on
The European Patent Office is in no way liable for these particulars which are merely given for the purpose of information.

26-02-2026

| Patent document cited in search report | Publication date | Patent family member(s) | Publication date |
|---|---|---|---|
| US 11786885 B2 | 17-10-2023 | CN 117651608 A | 05-03-2024 |
| | | EP 4134160 A1 | 15-02-2023 |
| | | JP 2024531049 A | 29-08-2024 |
| | | US 2023144345 A1 | 11-05-2023 |
| | | US 2023415129 A1 | 28-12-2023 |
| | | WO 2023017258 A1 | 16-02-2023 |
| EP 4414053 A1 | 14-08-2024 | CN 120379748 A | 25-07-2025 |
| | | EP 4414053 A1 | 14-08-2024 |
| | | JP 2026505228 A | 13-02-2026 |
| | | US 2024269612 A1 | 15-08-2024 |
| | | WO 2024170867 A1 | 22-08-2024 |
| WO 2022258962 A1 | 15-12-2022 | CN 117098601 A | 21-11-2023 |
| | | EP 4101533 A1 | 14-12-2022 |
| | | JP 2024522426 A | 21-06-2024 |
| | | US 2022401926 A1 | 22-12-2022 |
| | | WO 2022258962 A1 | 15-12-2022 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2022258961 A
- WO 2022258962 A
- WO 2024175877 A


### Non-patent literature cited in the description


- **N. V.Y. SCARLETT** ; **I.C. MADSEN,**. Quantification of phases with partial or not known crystal structure. *Powder Diffraction*, 2006, vol. 21 (4), 278-284